# EUROPEAN PATENT APPLICATION

(11) **EP 4 236 049 A1**
(43) Date of publication of application: **30.08.2023**
(21) Application number: 22158635.7
(22) Date of filing: 24.02.2022
(51) Int. Cl.: H02M 1/32, H02M 1/36, H02M 3/335

(54) **ACTIVE-BRIDGE CONVERTER CIRCUIT, ACTIVE-BRIDGE CONVERTER ARRANGEMENT AND METHOD FOR OPERATING THE ACTIVE-BRIDGE CONVERTER CIRCUIT**

(71) Applicant: Rolls-Royce Solutions GmbH, 88045 Friedrichshafen (DE); Rolls-Royce plc, London SW1E 6AT (GB)
(72) Inventor: Kotturu, Janardhana, 643986 SINGAPORE (SG); Simanjorang, Rejeki, 29464 BATAM (ID); Vaiyapuri, Viswanathan, 520291 SINGOPORE (SG); Dasgupta, Souvik, 642685 SINGAPORE (SG); Gupta, Amit, 650386 SINGAPORE (SG); Neubauer, Steffen, 88662 Überlingen (DE)
(74) Representative: Eisenführ Speiser

(57) **Abstract**

The invention regards a dual-active-bridge (DAB) converter circuit (100) comprising a primary bridge circuit (116) and a secondary bridge circuit (126) that are inductively coupled to each other through a frequency transformer (102), wherein
- a primary capacitor (114) is connected in parallel to the primary bridge circuit (116),
- the primary bridge circuit (116) and the primary capacitor (114) are electrically connectable to a DC bus (1204), and
- the secondary bridge circuit (126) is electrically connectable to a DC power supply (1202).

According to the invention the dual-active-bridge converter circuit (100) further is configured to execute a pre-charging procedure for pre-charging the primary capacitor (114),
wherein the pre-charging procedure comprises at least the step of transferring electrical power received from the DC power supply (1202) from the secondary bridge circuit (126) to the primary bridge circuit (116);
and/or
- the active-bridge converter circuit (500) is configured to execute a de-energizing procedure for de-energizing the primary capacitor (114),

wherein the de-energizing procedure comprises at least the step of dissipating electrical energy stored in the primary capacitor (114) using at least the primary bridge circuit (116).

## Description

The present invention relates to an active-bridge converter circuit, in particular a dual-active-bridge converter circuit according to the preamble part of claim 1. Such active-bridge converter circuit comprises a primary bridge circuit and a secondary bridge circuit, that are inductively coupled to each other through a frequency transformer. Therein, a primary capacitor is connected in parallel to the primary bridge circuit and the primary bridge circuit and the primary capacitor are electrically connectable to a DC bus. Further therein, the secondary bridge circuit is electrically connectable to a DC power supply.

The present invention also relates to an active-bridge converter arrangement, in particular a dual-active-bridge converter arrangement (DAB converter arrangement), comprising the active-bridge converter circuit (respectively DAB converter circuit). Therein a DC power supply, like e.g. a battery power source (for example a battery package) or the like DC power source, is electrically connected to the secondary bridge circuit, which can also be referred to as positioned on the "input side", of the dual-active-bridge converter circuit. Further, a DC bus, like e.g. a main DC bus (for example a traction DC link) or the like DC load bus, is electrically connected to the primary bridge circuit, which can also be referred to as positioned on the "output side", of the dual-active-bridge converter circuit, in particular also to the primary capacitor.

The present invention also relates to a respective method for operating an active-bridge converter circuit, in particular a dual-active-bridge converter circuit, comprising the primary bridge circuit and the secondary bridge circuit inductively coupled through a frequency transformer.

A DC-to-DC converter (hereinafter DC/DC converter) is an electronic circuit device that converts a source of direct current (DC current) from a first voltage level to another, second voltage level. It is a specific kind of converter of the general converter-type known as an "electric power converter". Power levels range from very low (small batteries) to very high (high-voltage power transmission).

In this application, thus generally (except as indicated otherwise) the meaning of "connected" means "electrically connected" and the meaning of "connected in parallel" and the like means to define the specific kind of electrically switching an electrical element in relation to another electrical element to configure a respective kind of electrical circuit; thus, in the given example, to configure an electrical circuit with electrical elements switched in a parallel electrical connection relative to each other. The meaning of electrical connection thus is not restricted to a certain kind of electrical contact but embraces all kinds of contact- or non-contact-couplings to transmit an electrical signal or to hold a certain electrical state to establish a circuit operation of the electrical circuit with the specified electrically switched elements.

DC/DC converters (DC-to-DC converters) are used in one kind of application for portable electronic devices such as cellular phones and laptop computers, which are supplied with power from batteries primarily. Transformers used for voltage conversion at main frequencies of 50-60 Hz, however, must be large and heavy for powers exceeding a few watts. This makes them expensive, and they are subject to energy losses in their windings and due to eddy currents in their cores.

DC-to-DC techniques as mentioned above in another kind of application that use transformers or inductors work at much higher frequencies, requiring only much smaller, lighter, and cheaper wound components. Consequently, these techniques are used even where a main transformer could be used; for example, for domestic electronic appliances it is preferable to rectify main voltage to DC, use switch-mode techniques to convert it to high-frequency AC at the desired voltage, then, usually, rectify to DC. The entire complex circuit is cheaper and more efficient than a simple mains transformer circuit of the same output. DC/DC converters are widely used for DC microgrid applications, in the context of different voltage levels. Practical electronic converters use switching techniques.

Switched-mode DC/DC converters convert a first DC voltage level to another, second DC voltage level; which other second DC voltage level may be higher or lower than the first DC voltage level. The conversion by the switched-mode DC/DC converter is established by storing the input energy temporarily and then releasing that energy to the output at a different voltage. The storage may be in either magnetic field storage components (inductors, transformers) or electric field storage components (capacitors). Thus, this conversion method can increase or decrease voltage.

In this application generally an active bridge is used as term for a common active bridge; still the term active bridge can also mean a multi-active bridge. Thus, an active bridge converter as mentioned hereinafter should embrace in general any kind of a bridge converter like a dual-active bridge DC/DC converter (DAB converter) and also a multi-active bridge DC/DC converter or the like in general. A dual-active bridge or multi-active bridge is inherently isolated; thus the term "isolated", although used in most instances hereinafter, is optional since dual-active bridge or multi-active bridge can be considered as inherently isolated.

Further, although isolated multi-active bridge DC/DC converters may not be common, in this case, the term multi-active bridge DC/DC converter is used to describe a topology of DC/DC converters that comprises equal to or more than two active bridges. Hence, according to the term "multi-active bridge" it embraces also a dual-active bridge and is meant to embrace any active bridge converter like e.g. a commonly named dual-active bridge converter and multi-active bridge converter as mentioned above.

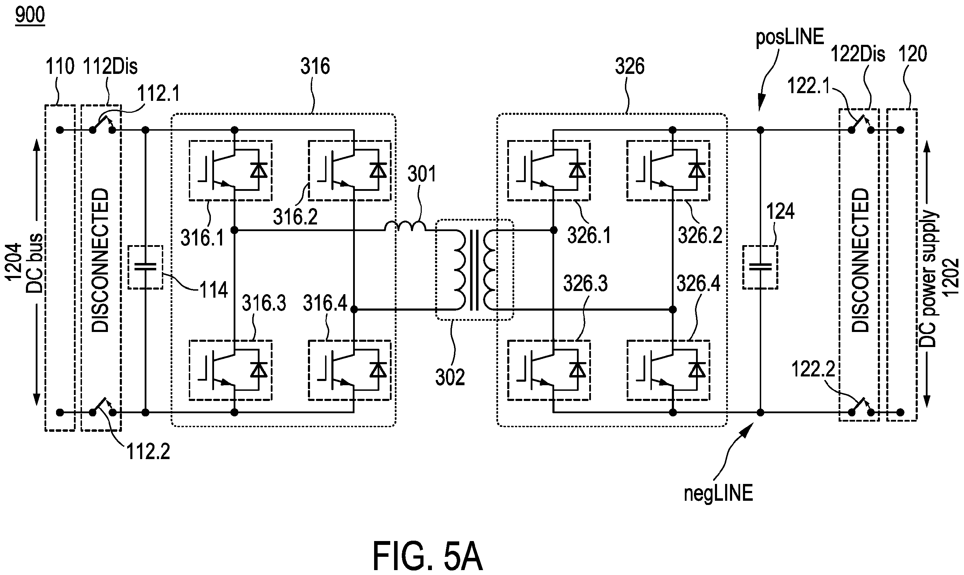

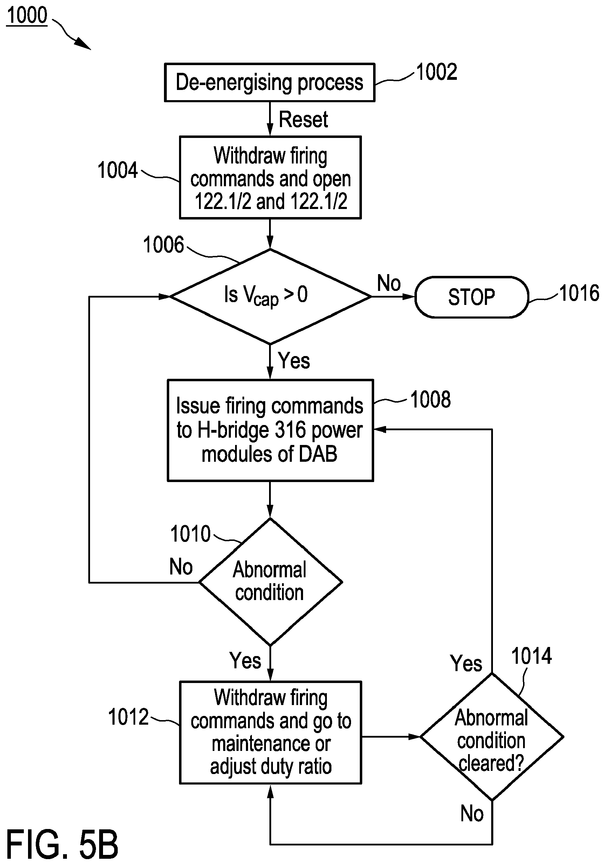

Still also, the instant invention may also be used in a single active bridge converter; thus, the term "active bridge converter" embraces all kinds of single- , dual-, quadrupole- or other multi-active bridge converters (SAB, DAB, QAB, MAB). A variety thereof is shown and described for example in Fig. 5 of the Article "Comparative Analysis of Multiple Active Bridge Converters Configurations in Modular Smart Transformer" in IEEE Transactions on Industrial Electronics, vol. 66, no. 1, pp. 191-202, Jan. 2019 of L.F. Costa et al.. In particular in systems in which installation space and costs only play a subordinate role (e.g. container storage), it can make sense to use two separate converters that are optimized for the respective operating range. However, preferred is a dual-active bridge (DAB) converter with building blocks, in particular in a symmetric configuration. A dual active bridge is a bidirectional DC-DC converter with identical primary and secondary side full-bridges and a high frequency transformer; optionally also an energy transfer inductor and/or DC-link capacitors. In a preferred development, the converter circuit has a H-bridge circuit, also often referred to as a full-bridge circuit. These circuits have shown to be very efficient in the conversion of electrical power. In variants of this development, each H-bridge comprises up to four switching elements.

A dual-active bridge (DAB) as such is known as a common term in the technical field. Also an isolated multi-active bridge (MAB) DC/DC converter is generally known in the technical field and applies to a broad scope of various developments of active bridge DC/DC converters like also quadrupole active bridge (QAB) converters and the like. In this case a multi-active bridge DC/DC converter is used to describe a topology of DC/DC converters that comprises equal to or more than two active bridges and make it more general, hence the term "multi-active bridge" embraces also a dual-active bridge and is meant to embrace any active bridge converter like e.g. a commonly named dual-active bridge converter and multi-active bridge converter as mentioned above. The term isolated is optional since dual-active bridge or multi-active bridge is inherently isolated; nevertheless in some cases hereinafter the term "isolated" is used redundantly.

Generally, a dual-active-bridge (DAB) is a bidirectional for a DC/DC converter with identical primary and secondary side full-bridges and a high frequency transformer and an energy transfer inductor and DC-link capacitors. Energy transfer inductance in a model refers to the leakage inductance of the transformer plus any necessary external energy transfer inductance. Two legs of both full-bridges e.g. can be driven with complimentary square-wave pulses. Power flow in the dual-active- bridge can be directed by phase-shifting the pulses of one bridge with respect to the other using phase shift modulation. Such control directs power between the two DC buses such that the leading bridge delivers power to the lagging bridge. Most DC/DC converter circuits also regulate the output voltage.

As an example, bidirectional DC/DC converters, such as dual-active-bridge converters (DAB converters), are frequently used in high-power applications such as electric or hybrid-electric vehicles, which is the main technical field of interest in the instant case - an example is a power converter in a rail way application, namely a so-called rail converter. Generally, such kind of DC/DC converters require DC-link capacitors at both input and output terminals of the DC/DC converter. Contactors are usually used to connect or disconnect the DC-link capacitors with a DC power supply or a DC bus.

Electrical vehicles such as hybrid electric vehicles and plug-in hybrid electric vehicles use the two-stage power converting mechanism such as DC/DC and DC/AC converter fed electric machines to drive the electric vehicles with motoring and generating model. The DC/DC converters use DC link capacitors on both input and output terminals to connect the DC/DC converter in between DC appliances like e.g. the aforementioned battery power source on the input (secondary) side and the main DC-bus on the output (primary) side; this is by means of a pair of mechanical contactors on positive and negative power lines . The DC-link capacitors are generally pre-charged with the additional circuitry, which consists of a semiconductor switch and a resistor in series between main DC-bus and DC-link capacitor.

Now, when a DC power supply or a DC bus is connected to an uncharged DC-link capacitor, the contactors are subjected to excess inrush currents, which may lead to arching and can be harmful to the contactors as well as other surrounding electronic parts. Thus, pre-charging of the so called primary capacitor is important to protect the electronic components of the dual-active-bridge converter circuit against the inrush of excess currents. Generally, the DC/DC converter requires the DC-link capacitors at input and output ends. The operation of DC/DC converters includes the charging and discharging of these capacitors during starting and stopping model respectively. The requirement of pre-charging and discharging of DC-link capacitors is unavoidable specially in the high-power applications.

Likewise, once a DC-link capacitor is charged and the DC/DC converter needs to be shut down, for example for maintenance or repair, the charged DC-link capacitors also pose a risk to personal and equipment.

As a result, DC/DC converters known in the prior art often comprise circuits for pre-charging and/or de-energizing the so called primary capacitor, in particular a DC-link capacitor. The pair of contactors are used to connect or disconnect the DC-link capacitors with the power source or the main DC-bus. In particular such line contactors experience the excess inrush currents when the contactors are closed to connect with the uncharged capacitors. These inrush currents are limited with the help of pre-charging circuits. But still then the pre-charging circuits are exposed to inrush currents. In order to limit the excess current, in the prior art the pre-charging circuits used to pre-charge the DC-link capacitors require additional electronic components that increase the complexity of the circuit and with it the cost of the circuit.

For example, in US 6,768,621 B2 a circuit for coupling a power source to a load is disclosed that comprises a main contactor coupled in series with the power source and the load, a pre-charge circuit comprising a first conductive path coupled in parallel with the main contactor, a decharge circuit comprising a second conductive path coupled in parallel with the load, and a controller circuit coupled to the main contactor and to the pre-charge circuit, the controller circuit operative to control the opening of the main contactor based on a current through the first conductive path.

It desirable to provide an improved approach for pre-charging DC-link capacitor of an active-bridge converter device, in particular a dual-active-bridge converter device.

Thus, it is an objective of the present invention to provide in a first aspect an active-bridge converter device, in particular a dual-active-bridge converter device, and in a second aspect a method for operation thereof, which is capable for an improved pre-charging of the active-bridge converter device's DC-link capacitor, respectively dual-active-bridge converter device's DC-link capacitor.

This objective is achieved by the invention in a first aspect by an active-bridge converter circuit, in particular a dual-active-bridge converter circuit, according to claim 1.

The invention in its first aspect also leads to an active-bridge converter arrangement, in particular a dual-active-bridge converter arrangement (DAB converter arrangement), of claim 16.

Moreover, in a second aspect of the invention, this objective is achieved by a method according to claim 17 for operating the active-bridge converter circuit, in particular the dual-active-bridge converter circuit circuit.

In the following, the dual-active-bridge converter device; this is a circuit and an arrangement of the first aspect of the invention, will be described.

The invention starts from as mentioned in the introduction; namely comprising a primary bridge circuit and a secondary bridge circuit, wherein the primary bridge circuit and the secondary bridge circuit are inductively coupled to each other through a frequency transformer. Moreover, the dual-active-bridge converter circuit comprises a primary capacitor that is connected in parallel to the primary bridge circuit, wherein the primary bridge circuit and the primary capacitor are electrically connectable to a DC bus and the secondary bridge circuit is electrically connectable to a DC power supply.

According to the invention
- the active-bridge converter circuit, in particular dual-active-bridge converter circuit, further is configured to execute a pre-charging procedure for pre-charging the primary capacitor, wherein the pre-charging procedure comprises at least the step of transferring electrical power received from the DC power supply from the secondary bridge circuit to the primary bridge circuit;
   and/or
- the active-bridge converter circuit, in particular dual-active-bridge converter circuit, is configured to execute a de-energizing procedure for de-energizing the primary capacitor wherein the de-energizing procedure comprises at least the step of dissipating electrical energy stored in the primary capacitor using at least the primary bridge circuit.

Thus, the invention starts from the idea to improve an active-bridge converter circuit, which is as such known in the art. That kind of active-bridge converter circuit provides a primary capacitor of the active-bridge converter circuit that corresponds in particular to the DC-link capacitor referred to above.

Preferably the active-bridge converter circuit is in the form of a dual-active-bridge converter circuit. The primary bridge circuit and the secondary bridge circuit are preferably of the kind known in the art as H-bridge circuit or full-bridge circuit.

Furthermore, the transfer of electrical power from the secondary bridge circuit to the primary bridge circuit corresponds to an inductive transfer of energy through the frequency transformer.

Furthermore, the invention is based on the recognition that pre-charging of the primary capacitor is important to protect the electronic components of the active-bridge converter circuit against the inrush of excess currents.

As claimed with the characterizing part of claim 1 the inventive approach establishes to use the primary and the secondary bridge circuit themselves being of improved operation mode according to the invention to execute a pre-charging procedure for pre-charging the primary capacitor and/or configured to execute a de-energizing procedure for de-energizing the primary capacitor. The primary and the secondary bridge circuit themselves of improved operation mode in combination with electrical energy provided by a DC power supply being connectable to the secondary bridge circuit of the active-bridge converter circuit are useful adapted to pre-charge and/or to de-energize the primary capacitor.

More particularly, according to the inventive concept, said DC power supply is being connectable to the secondary bridge circuit of the active-bridge converter circuit directly -this is without intermediate pre-charging circuit-- to pre-charge the primary capacitor.

The new invention is about to eliminate the additional prior art pre-charging circuit and utilizes instead the self-controlled function of the DC/DC converter to charge the DC-link capacitor.

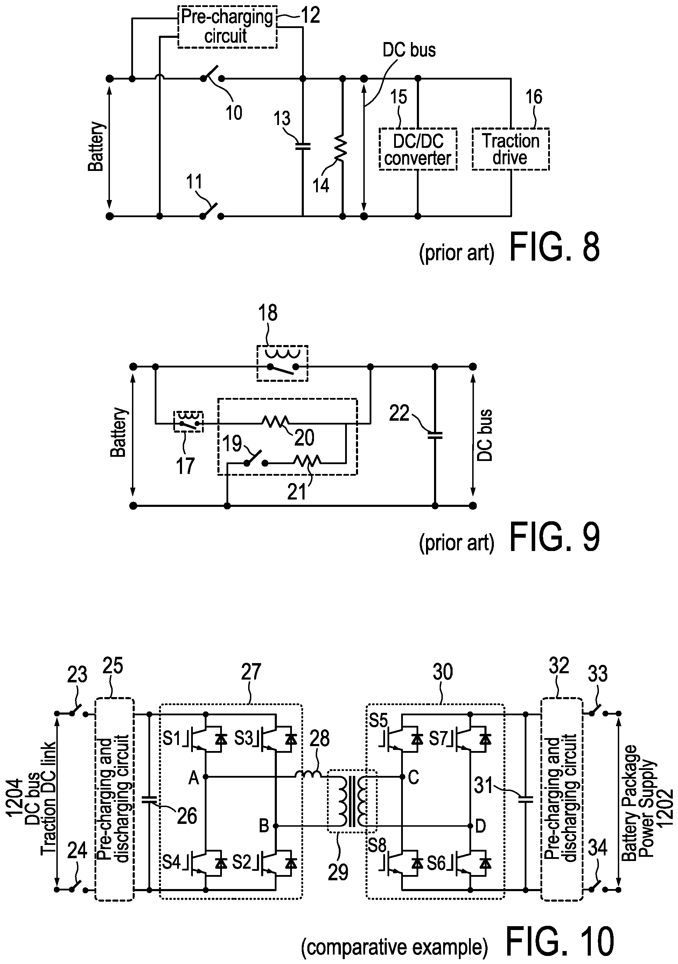

In particular -as explained in the comparative non-limiting scheme of FIG. 10 in detail-- the pre-charging and discharging blocks are excluded in between the contactors and DC-link capacitor at the output side (respective DC-bus side) of the DAB converter and similarly in between the contactors and capacitor on the input side (respective battery side) of the converter.

The invention recognized that thereby the number of electrical components used in comparison to the prior art is greatly reduced.

Thus, the invention uses for the circuit and method the main idea in that for pre-charging the primary capacitor respectively of dc-link capacitors without additional pre-charging circuit and/or for de-energizing the primary capacitor respectively of DC-link capacitors without additional de-energizing circuit can be achieved instead by altering the operating modus of the active-bridge converter circuit respectively.

Thus the concept of the invention provides for that the pre-charging procedure comprises at least the step of transferring electrical power received from the DC power supply from the secondary bridge circuit to the primary bridge circuit; and/or
the de-energizing procedure comprises at least the step of dissipating electrical energy stored in the primary capacitor using at least the primary bridge circuit.

This concept of altering the control algorithm further provides for troubleshoot if any fault condition is occurred while operating the DAB converter.

However, still further, the invention is particularly advantageous in those situations, where the DC power supply is a low-voltage power supply, in particular a low-voltage electrical power storage element, such as a battery. If the DC power supply is a low-voltage power supply, a DC-link capacitor connected in parallel to the secondary bridge circuit does not require pre-charging.

Moreover, electrical power stored in the DC power supply can be used to pre-charge the primary capacitor.

Thus, an improved approach for pre-charging DC-link capacitors of a active-bridge converter device is provided. The pre-charging procedure and the de-energizing procedure are independent from each other, i.e. some developments of the active-bridge converter circuit are configured to execute only the pre-charging procedure or the de-energizing procedure.

Lastly, the method according to the second aspect of the invention for operating the active-bridge converter, in particular dual-active-bridge converter, will be described.

The method is applicable for operating an active-bridge converter circuit, in particular dual-active-bridge converter circuit, comprising a primary bridge circuit and a secondary bridge circuit inductively coupled through a frequency transformer. Furthermore, a primary capacitor is connected in parallel to the primary bridge circuit. Moreover, the primary bridge circuit and the primary capacitor are electrically connectable to a DC bus and the secondary bridge circuit is electrically connectable to a DC power supply.

The method includes a pre-charging procedure for pre-charging the primary capacitor,
wherein the pre-charging procedure comprises at least the step of transferring electrical power received from the DC power supply from the secondary bridge circuit to the primary bridge circuit;
and/or
- the method includes a de-energizing procedure for de-energizing the primary capacitor, wherein the de-energizing procedure comprises at least the step of dissipating electrical energy stored in the primary capacitor using at least the primary bridge circuit.

The method described above shares all advantages of the active-bridge converter circuit of the first aspect of the invention.

Advantageous developments of the invention are found in the dependent claims and indicate in detail advantageous possibilities to realize the concept described above within the scope of the task as well as with regard to further advantages. In the following, preferred developments of the active-bridge converter circuit, in particular the dual-active-bridge converter circuit, will be described.

According to a particular preferred development of the invention the active-bridge converter circuit, in particular dual-active-bridge converter circuit, is configured to execute a pre-charging procedure for pre-charging the primary capacitor comprising the steps of:
- electrically connect the secondary bridge circuit to the DC power supply;
- transfer electrical power received from the DC power supply from the secondary bridge circuit to the primary bridge circuit;
- electrically charge the primary capacitor using the transferred electrical power; and
- electrically connect the primary capacitor and the primary bridge circuit with the DC bus.

In particular the active-bridge converter circuit, in particular dual-active-bridge converter circuit, is controllable by respective electrical switch means and/or powerflow means adapted to disconnect electrical elements and/or cease of transfer or dissipate power between elements of the active-bridge converter circuit, in particular dual-active-bridge converter circuit,.

According to a particular preferred development of the invention transferring electrical power received from the DC power supply from the secondary bridge circuit to the primary bridge circuit comprises at least the step of:
- issue firing commands to the primary bridge circuit and secondary bridge circuit in constant current and voltage control mode, wherein a phase shift angle for primary bridge circuit and secondary bridge circuit is set dependent on an amount of power transfer from the secondary
bridge circuit to the primary bridge circuit,
in particular is set dependent on a magnitude of pre-charging the primary capacitor
and/or voltage of the DC power supply and DC bus.

In a preferred development, the active-bridge converter circuit, in particular dual-active-bridge converter circuit, is configured to only electrically connect the primary bridge circuit and the primary capacitor with the DC bus, upon the electrical charges stored in the primary capacitor surpassing a minimum charge level. Connecting the primary bridge circuit to the DC bus only when the primary capacitor is electrically charged and the electrical charge is larger than the minimum charge level is advantageous to reduce the strength of the inrush of currents when the DC bus and the primary bridge circuit are connected.

In yet another preferred development, the active-bridge converter circuit, in particular dual-active-bridge converter circuit, comprises a condition observation unit, that is configured to determine an operation condition of the active-bridge converter circuit, in particular dual-active-bridge converter circuit,. Moreover, the active-bridge converter circuit, in particular dual-active-bridge converter circuit, is configured, in case an abnormal operation condition of the active-bridge converter circuit, in particular dual-active-bridge converter circuit, is detected by the condition observation unit, to stop the charging of the primary capacitor.

An abnormal operation condition is any operation condition that indicates a defect of the active-bridge converter circuit, in particular dual-active-bridge converter circuit, In a variant of this development, the condition observation unit comprises a temperature sensor that is configured to determine a temperature of the active-bridge converter circuit, in particular dual-active-bridge converter circuit, or any one of its component. Furthermore, the abnormal operation condition in the context of this development is defined as an operation condition in which the determined temperature exceeds an operation temperature limit.

In another development, the primary bridge circuit and the secondary bridge circuit of the active-bridge converter circuit, in particular dual-active-bridge converter circuit, comprise primary switching elements and secondary switching elements, respectively. Moreover, the active-bridge converter circuit, in particular dual-active-bridge converter circuit, is configured
- to transfer the electrical power received from the DC power supply from the secondary bridge circuit to the primary bridge circuit by operating the secondary switching elements, and
- to electrically charge the primary capacitor by operating the primary switching elements.

The use of switching elements is particularly advantageous to transfer electrical power from one bridge circuit to the other. Moreover, the switching elements can be supplied with a different firing commands, for example, to adjust a charging rate with which the primary capacitor is charged.

In variants of this development, the active-bridge converter circuit, in particular dual-active-bridge converter circuit, is configured to send firing commands to the switching elements of the secondary bridge circuit such that electrical energy is transferred through the frequency transformer from the secondary bridge circuit to the primary bridge circuit. Furthermore, the active-bridge converter circuit, in particular dual-active-bridge converter circuit, is configured to send firing commands to the switching elements of the primary bridge circuit such that electrical energy received from the secondary bridge circuit is used to pre-charge the primary capacitor.

In a further development, the primary bridge circuit of the active-bridge converter circuit, in particular dual-active-bridge converter circuit, is electrically connectable to the DC bus through a primary contactor element and the secondary bridge circuit is electrically connectable to the DC power supply through a secondary contactor element. Moreover, the dual-active-bride converter circuit is configured to electrically connect the primary capacitor and the primary bridge circuit to the DC bus by switching the primary contactor element into a closed state, and to electrically connect the secondary bridge circuit to the DC power supply by switching the secondary contactor element into a closed state. Contactor elements are an efficient way to selectively connect and disconnect the primary and secondary bridge circuits as well as the primary capacitor to and from the DC bus and the DC power supply, respectively. The closed state referred to above is to be understood as a state in which the respective contactor element is conducting electrical current between its input and output terminals.

In yet another development, the active-bridge converter circuit, in particular dual-active-bridge converter circuit, comprises an auxiliary DC power supply. Moreover, the active-bridge converter circuit, in particular dual-active-bridge converter circuit, is configured to determine a DC power supply charge level indicative of a level of charge of the DC power supply. Furthermore, the active-bridge converter circuit, in particular dual-active-bridge converter circuit, is configured, in case that the DC power supply charge level is below a minimum charge level, to use electrical energy stored in the auxiliary power supply to charge the primary capacitor. Through the auxiliary DC power supply situations can be prevented, in which the DC power supply does not have sufficient energy to charge the primary capacitor and in which, as a result, the pre-charging procedure cannot be executed successfully.

In a variant of this development, the active-bridge converter circuit, in particular dual-active-bridge converter circuit, is additionally or alternatively configured to determine a health condition of the DC power supply, wherein, in case a bad health condition is determined, the active-bridge converter circuit, in particular dual-active-bridge converter circuit, is configured to replace the DC power supply with the auxiliary DC power supply.

In other variants, the active-bridge converter circuit, in particular dual-active-bridge converter circuit, is configured to use electrical energy stored in the auxiliary power supply to charge the primary capacitor by first charging a power storage element, such as a battery, comprised in the DC power supply and subsequently transferring the electrical energy now stored in the battery from the secondary circuit to the primary circuit. In other variants, the electrical energy stored in the auxiliary DC power supply is directly transferred from the secondary bridge circuit to the primary bridge circuit.

In yet another development, the active-bridge converter circuit, in particular dual-active-bridge converter circuit, is configured to execute a de-energizing procedure for de-energizing the primary capacitor comprising the steps:
- electrically disconnect the primary capacitor and the primary bridge circuit from the DC bus;
- cease any power transfer from the secondary bridge circuit to the primary bridge circuit; and
- dissipate electrical energy stored in the primary capacitor using the primary bridge circuit.

The de-energizing procedure is particularly advantageous in those situation when the active-bridge converter circuit, in particular dual-active-bridge converter circuit, needs to be disconnected from the DC bus, for example, to undergo maintenance. The discharging of the primary capacitor reduces the risk of an accidental discharge of the primary capacitor which might harm maintenance personal or other electronics. The frequency transformer acts as a load to dissipate the energy stored in the primary capacitor, when the primary bridge circuit is operated accordingly.

Moreover, the de-energizing procedure is advantageous in comparison to the prior art de-energizing circuit, because the de-energizing procedure according to the idea of the invention does not require additional circuitry such as a bleeder resistor.

According to a preferred development dissipating electrical energy stored in the primary capacitor using at least the primary bridge circuit comprises at least the step of:
- issuing firing commands to the primary bridge circuit to operate in the inverter mode so as to dissipate the energy stored in the primary capacitor to the frequency transformer, wherein an equivalent impedance of the frequency transformer acts as a load,
in particular wherein issuing firing commands is established non-continuously or regulated with shortened duration.

In variants of this development, the active-bridge converter circuit, in particular dual-active-bridge converter circuit, is configured to modulate a pulse width of firing commands issued to the primary bridge circuit to avoid excess heating of the frequency transformer.

In variants of this development, the active-bridge converter circuit, in particular dual-active-bridge converter circuit, comprises a secondary capacitor that is connected in parallel to the secondary bridge circuit. Moreover, the de-energizing procedure comprises the steps of:
- electrically disconnect the secondary capacitor and the secondary bridge circuit from the DC power supply;
- dissipate electrical energy stored in the secondary capacitor using the secondary bridge circuit.

The described variant allows the de-charging also of the secondary capacitor. While the DC power supply typically is a low-voltage DC power supply, the pre-charging of the secondary capacitor is usually of lesser importance. However, during maintenance any charged capacitor poses a risk to maintenance personal. The variant described above, therefore, reduces the risk of injuries that results from a charged secondary capacitor during maintenance. In particular, the energy stored in the secondary capacitor is dissipated over the frequency transformer, which acts as a load when the secondary bridge circuit is operated accordingly.

In yet other variants of the development described above, the primary bridge circuit and the secondary bridge circuit comprises primary switching elements and secondary switching elements, respectively. Furthermore, the active-bridge converter circuit, in particular dual-active-bridge converter circuit, is configured to dissipate the electrical energy stored in the primary capacitor by operating the primary switching elements. Moreover, in case of a combination of this variant with the previously described variant, the active-bridge converter circuit, in particular dual-active-bridge converter circuit, is configured to dissipate the electrical energy stored in the secondary capacitor by operating the secondary switching elements.

As already described above, the use of switching elements is particularly advantageous to transfer electrical power from one bridge circuit to the other. Moreover, the switching elements can also be supplied with such firing commands such that any received electrical power from the electrically connected capacitors can be dissipated.

In yet another variant of the described development, the primary bridge circuit is electrically connectable to the DC bus through a primary contactor element. Moreover, the dual-active-bride converter circuit is configured to electrically disconnect the primary bridge circuit from the DC bus by setting the primary contactor element into an open state. As already described above, contactor elements are an efficient way to selectively connect and disconnect the primary and secondary bridge circuits to and from the DC bus and the DC power supply, respectively. The open state referred to above is to be understood as a state in which the respective contactor element is not conducting electrical current between its input and output terminals.

In another preferred development, the active-bridge converter circuit, in particular dual-active-bridge converter circuit, comprises a controller circuit that is connected to the primary bridge circuit and the secondary bridge circuit and that is configured to execute the pre-charging procedure. A controller circuit is advantageous to bundle all control functionalities into one circuit.

In variants of this development that are also configured to execute the de-charging procedure, the controller circuit is also configured to execute the de-energizing procedure.

In yet other variants, the active-bridge converter circuit, in particular dual-active-bridge converter circuit, comprises a plurality of primary bridge circuits and secondary bridge circuits, wherein the primary bridge circuits and the secondary bridge circuits are arranged in an Input-Series/Output-Parallel dual-active-bridge configuration or an Input-Parallel/Output-Parallel dual-active-bridge configuration. Moreover, the controller circuit is configured to execute a pre-charging procedure for each of a plurality of primary capacitors, wherein each primary capacitor is electrically connected in parallel to one of the primary bridge circuits.

In another preferred development, the active-bridge converter circuit, in particular dual-active-bridge converter circuit, does not comprise any circuits connected in series or in parallel to the primary capacitor whose main purpose is pre-charging or de-energizing the primary capacitor. In particular, the active-bridge converter circuit, in particular dual-active-bridge converter circuit, does not comprise a pre-charging or de-energizing circuit that is positioned between the primary capacitor and any contactor element connecting or disconnecting the primary bridge circuit to or from the DC bus. Due to the pre-charging procedure and the de-energizing procedure of the invention, a pre-charging or de-energizing circuit is not required, which reduces the complexity and the costs of the active-bridge converter circuit, in particular dual-active-bridge converter circuit.

In another variant of this development, the active-bridge converter circuit, in particular dual-active-bridge converter circuit, does not comprise a bleeder resistor to de-energize the primary capacitor or a constant current source to pre-charge the active-bridge converter circuit, in particular dual-active-bridge converter circuit,

In the following, the dual-active-bridge converter arrangement in relation with the first aspect of the invention will be described.

The dual-active-bridge converter arrangement comprises the active-bridge converter circuit, in particular dual-active-bridge converter circuit, according to the first aspect of the invention, a DC power supply that is electrically connected to the secondary bridge circuit of the active-bridge converter circuit, in particular dual-active-bridge converter circuit,, and a DC bus electrically that is electrically connected to the primary bridge circuit of the active-bridge converter circuit, in particular dual-active-bridge converter circuit,. The dual-active-bridge converter arrangement shares all the advantages of the active-bridge converter circuit, in particular dual-active-bridge converter circuit, of the first aspect of the invention.

Preferably the method includes a pre-charging procedure for pre-charging the primary capacitor comprising the steps of:
- electrically connect the secondary bridge circuit to the DC power supply;
- transfer electrical power received from the DC power supply from the secondary bridge circuit to the primary bridge circuit;
- electrically charge the primary capacitor using the transferred electrical power; and
- electrically connect the primary bridge circuit and the primary capacitor to the DC bus.

Preferably the method includes the active-bridge converter circuit, in particular dual-active-bridge converter circuit, is configured to execute the de-energizing procedure for de-energizing the primary capacitor, wherein the de-energizing procedure comprises the steps of:
- electrically disconnect the primary capacitor and the primary bridge circuit from the DC bus;
- cease any power transfer from the secondary bridge circuit to the primary bridge circuit; and
- dissipate electrical energy stored in the primary capacitor (114) using the primary bridge circuit.

These and other aspects of the invention will be apparent from and elucidated with reference to the embodiments described hereinafter with reference to the enclosed drawings. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination. In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. Further advantages, features and details of the invention result from the following description of the preferred embodiments as well as from the drawings. In the following, a summary of the figures is given.

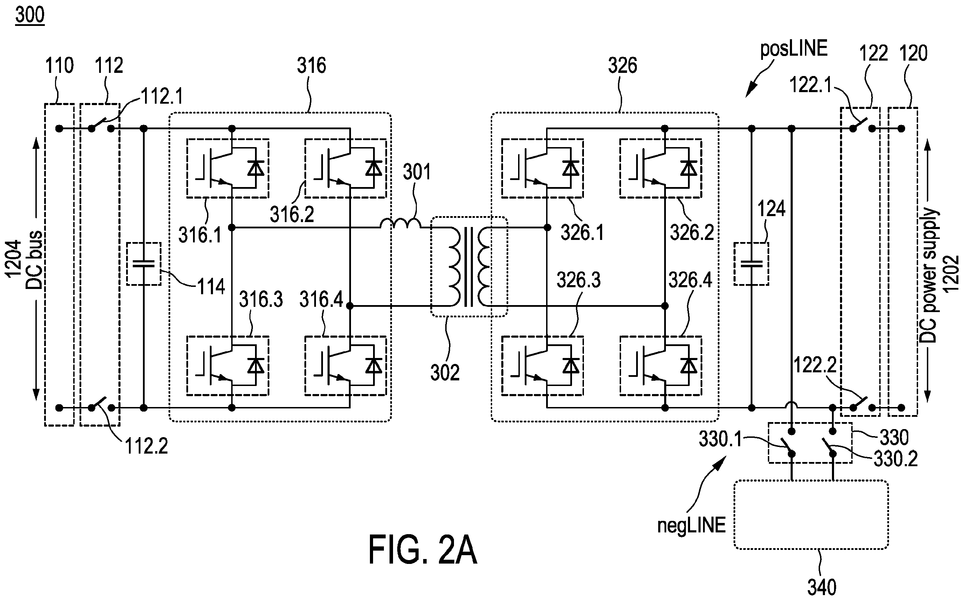

In the following it is shown in:
- FIG. 1A: a first preferred embodiment of an active-bridge converter circuit in form of a dual-active-bridge converter circuit in general according to the first aspect of the invention;
- FIG. 1B: a flowchart of an embodiment of a pre-charging procedure according to the second aspect of the invention, which the dual-active-bridge converter circuit of FIG. 1A is configured to execute;
- FIG. 2A: a second preferred embodiment of an active-bridge converter circuit in form of a dual-active-bridge converter circuit in detail with a full-bridge converter circuit (H-bridge circuit) which here comprises four switching elements and that is configured to execute a pre-charging procedure according to the first aspect of the invention;
- FIG. 2B: a flow chart of an embodiment of a pre-charging procedure according to the second aspect of the invention, which the dual-active-bridge converter circuit of FIG. 2A is configured to execute;
- FIG. 3A: an embodiment of a dual-active-bridge converter circuit in general that is configured to execute a de-energizing procedure according to the first aspect of the invention;
- FIG. 3B: a flow chart of an embodiment of a de-energizing procedure according to the second aspect of the invention, which the dual-active-bridge converter circuit of FIG. 3A is configured to execute;
- FIG. 4A: an embodiment of a dual-active-bridge converter circuit in general that is configured to execute an extended de-energizing procedure;
- FIG. 4B: a flow chart of an embodiment of the extended de-energizing procedure executed by the dual-active-bridge converter circuit of FIG. 4A;
- FIG. 5A: an embodiment of an active-bridge converter circuit in form of a dual-active-bridge converter circuit in detail with a full-bridge converter circuit (H-bridge circuit) which here comprises four switching elements that is configured to execute a further elaborated de-energizing procedure;
- FIG. 5B: an embodiment of a further elaborated de-energizing procedure as executed by the dual-active-bridge converter circuit of FIG. 5A;
- FIG. 6: a preferred embodiment of an active-bridge converter circuit in form of a dual-active-bridge converter circuit in detail with a full-bridge converter circuit (H-bridge circuit) which here comprises four switching elements and the dual-active-bridge converter circuit comprising a control circuit;
- FIG. 7: a preferred embodiment of a dual-active-bridge converter arrangement;
- FIG. 8: a first prior art embodiment of a converter arrangement;
- FIG. 9: a second prior art embodiment of a converter arrangement;
- FIG: 10: a general scheme of a comparative embodiment of a dual-active-bridge converter circuit with a full-bridge converter circuit (H-bridge circuit) which here comprises four switching elements for comparison to the dual-active-bridge converter circuit in detail as shown for the dual-active-bridge converter of FIG. 2A and FIG. 5A.

In the following description of the figures, reference signs are used to identify entities within the figures. In those cases in which identical entities appear in more than one figure, the same reference sign will be used to identify those identical entities. For brevity, a description of those entities is only provided once in connection with the first appearance of the entity.

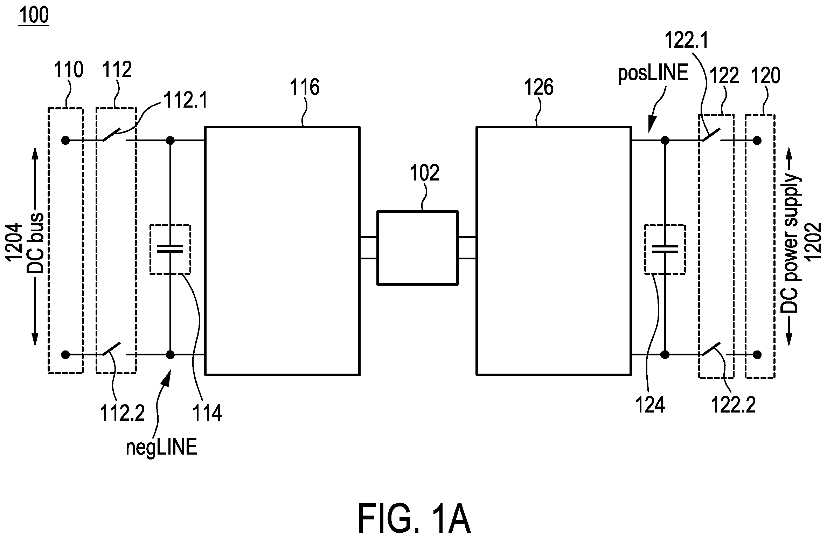

FIG. 1A shows an embodiment of a dual-active-bridge converter circuit 100 which comprises a primary bridge circuit 116 and a secondary bridge circuit 126.

The primary bridge circuit 116 and the secondary bridge circuit 126 are inductively coupled to each other through a frequency transformer 102. Moreover, the dual-active-bridge converter circuit 100 comprises a primary capacitor 114 connected in parallel to the primary bridge circuit 116. The primary bridge circuit 116 and the primary capacitor 114 are electrically connectable to a DC bus through a primary terminal 110 and a primary contactor element 112. The primary contactor element 112 is in the form of a pre-charging and dis-charging circuit.

The secondary bridge circuit 126 is electrically connectable to a DC power supply through a secondary terminal 120 and a secondary contactor element 122. The secondary contactor element 122 is in the form of a pre-charging and dis-charging circuit.

The primary contactor element comprises two line contactors 112.1 and 112.2, through which a negative power line posLINE and a positive power line negLINE of the DC bus can be electrically connected to or disconnected from the primary bridge circuit 116 and the primary capacitor 114. In other embodiments of the dual-active-bridge converter circuit, the contactor element 112 on the input/battery side and the contactor element 122 on the output/main DC bus side may only comprise one line contactor for either the negative or the positive power line negLINE, posLINE of the DC bus. In the instant embodiment the input contactor element 112 two, namely a first and second line contactor 112.1 and 112.2, and the output contactor element 122 comprises two, namely a first and second line contactor 122.1 and 122.2.

A secondary capacitor 124 is connected in parallel to the secondary bridge circuit 126, wherein the secondary capacitor 124 is connected between secondary bridge circuit 126 and the secondary contactor element 122. The primary capacitor 114 and the secondary capacitor 124 are also often referred to as DC-link capacitors in the literature.

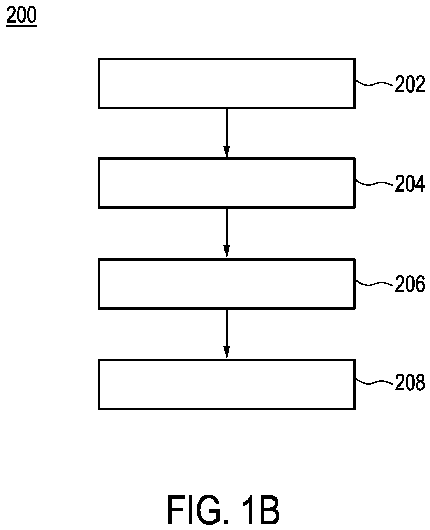

Furthermore, following the concept of the invention in its first aspect in this embodiment the dual-active-bridge converter circuit 100 in a preferred kind is configured to execute a pre-charging procedure 200 for pre-charging the primary capacitor 114. The pre-charging procedure 200 will be explained in the following with reference to FIG. 1B.

FIG. 1B shows the pre-charging procedure 200, which the dual-active-bridge converter circuit 100 of FIG. 1 is configured to execute. The pre-charging procedure 200 comprises four steps.

In step 202, the dual-active-bridge converter circuit 100 electrically connects the secondary bridge circuit 116 to the DC power supply. In step 204, the dual-active-bridge converter circuit 100 transfers electrical power received from the DC power supply from the secondary bridge circuit 126 to the primary bridge circuit 116. In step 206, the dual-active-bridge converter circuit 100 electrically charges the primary capacitor 114 using the transferred electrical power. In step 208, the dual-active-bridge converter circuit 100 electrically connects the primary bridge circuit and the primary capacitor 114 with the DC bus.

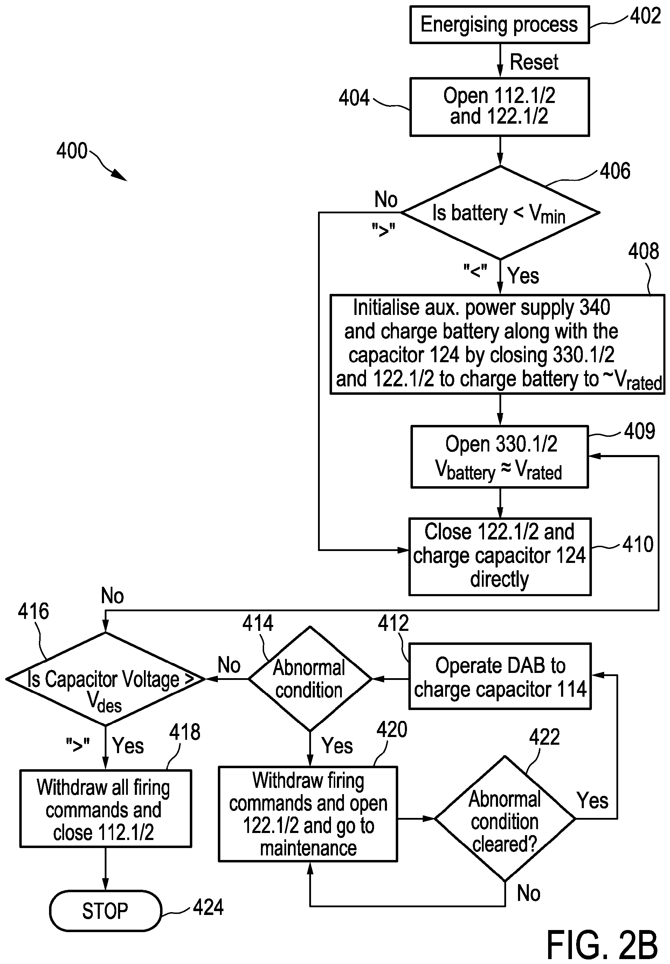

Other embodiments of the dual-active-bridge converter circuit are configured to execute further elaborated variants of the pre-charging procedures that are slightly different. Such an embodiment will be described in the following with reference to FIG. 2A and FIG. 2B.

FIG. 2A shows a varied preferred embodiment of a dual-active-bridge converter circuit 300.

The dual-active-bridge converter circuit 300 comprises a primary bridge circuit 316 and a secondary bridge circuit 326. The primary bridge circuit 316 and the secondary bridge circuit 326 are inductively coupled to each other by a frequency transformer 302. Furthermore, an inductor 301 is electrically connected in series between the primary bridge circuit 316 and the frequency transformer 302. The primary and secondary bridge circuit 316, 326 each establish a full-bridge converter circuit (H-bridge circuit) and here each comprise four switching elements, wherein the switching elements are realized through a parallel --more precisely anti-parallelarrangement of a diode and a transistor. The primary bridge circuit 316 comprises four switching elements 316.1 to 316.4, wherein each of the switching elements is realized through a parallel arrangement of a transistor and a diode. Likewise, also the secondary bridge circuit 326 comprises four switching elements 326.1 to 326.4 that each comprise a transistor and a diode in a parallel arrangement.

Moreover, the dual-active-bridge converter circuit 300 comprises an auxiliary DC power supply 340. The auxiliary DC power supply 340 is connectable to the secondary bridge circuit 326 through a contactor element 330 that comprises two line contactors 330.1 and 330.2.

The auxiliary DC power supply 340 is particularly advantageous in those situations, in which the DC power supply comprises a power storage element, such as a battery. In case, the power storage element is empty or in bad condition, the auxiliary DC power supply can be used to recharge the power storage element of the DC power supply.

The dual-active-bridge converter circuit 300 is configured to execute a pre-charging procedure 400 which will be described in the following with reference to FIG. 2B.

FIG. 2B shows a flow chart of the pre-charging procedure 400, which the dual-active-bridge converter circuit 300 of FIG. 2A is configured to execute.

The pre-charging procedure 400 starts with step 402. In step 404, the line contactors 112.1 and 112.2 and the line contactors 122.1 and 122.2 of the primary contactor element 112 and the secondary contactor element 122 are opened, if they are not already open. The primary contactor element 112 is in the form of a pre-charging and dis-charging circuit. The secondary contactor element 122 is in the form of a pre-charging and dis-charging circuit.

In step 406, the dual-active-bridge converter circuit 300 determines whether a level of charge of the power storage element comprised within the DC power supply --that is connectable to the dual-active-bridge converter circuit 300-- is larger than a minimum level of charge *Vₘᵢₙ.* In case the power storage element is sufficiently charged after step 406, this is if *Vₘᵢₙ* exceeds a certain level, the pre-charging procedure 400 is continued with step 410.

In case that the level of charge is below the minimum level of charge, this is if *Vₘᵢₙ* has not reached or is below a certain level in step 408, the line contactors 330.1 and 330.2 are closed; also line contactors 122.1, 122.2 are closed. Said line contactors are closed to charge the battery or the like power storage element comprised within the DC power supply up to the certain level of approx. V_{rated}. Further the aux. power supply 340 is used --i.e. the auxiliary DC power supply 340 is connected by the line contactors 330.1 and 330.2-- to charge the battery along with the secondary capacitor 124. Then, in the case the certain level of approx. V_{rated} is reached in a sufficient level of charge after charging in step 409 the line contactors 330.1 and 330.2 are opened again. At the same time, also the secondary capacitor 124 has been charged sufficiently along with the power storage element. As a result, the secondary capacitor 124 is charged directly by the DC power supply 340.

In other embodiments, the dual-active-bridge converter circuit is additionally configured to check a health condition of the power storage element of the DC power supply, wherein, in case of a bad health condition, the dual-active-bridge converter circuit is configured to close the line contactors 330.1 and 330.2 to replace the DC power supply with the auxiliary DC power supply 340.

In some embodiments, the determination of the level of charge or the determination of the health condition is performed using battery management system data. The auxiliary DC power supply is used to charge the battery at the secondary side of the bridge circuit, in case if the battery voltage is very low to operate.

In this condition, the secondary contactors are closed such that the battery and also the secondary capacitor are connected to the auxiliary DC power supply.

Once the power storage element of the DC power supply is sufficiently charged, the pre-charging procedure 400 continues with step 410. Therein the line contactors 122.1 and 122.2 of the contactor element 122 are closed.

In step 412, the secondary switching elements 326.1 to 326.4 of the secondary bridge circuit 326 are operated such that electrical energy received from the DC power supply through terminal 120 is transferred through inductor element 302 to the primary bridge circuit 316; this is the DAB converter is operated to charge the primary capacitor 114.

Moreover, in step 412, the switching elements 316.1 to 316.4 of the primary bridge circuit 316 are operated to charge the primary capacitor 114 using the electrical energy received from the secondary bridge circuit 326 through the inductor element 302. In particular, the dual-active-bridge converter circuit is configured to issue firing commands to the primary switching elements 316.1-316.4 of the primary bridge circuit 316 and the secondary switching elements 326.1, 326.2, 326.3, 326.4 of the secondary switching elements 326 in constant current and voltage control mode.

More precisely, the dual-active-bridge converter circuit is configured to issue 50% duty cycle pulse width modulating (PWM) pulses to the secondary bridge circuit 326, while phase-shifted PWM pulses are issued to the primary bridge circuit 316. Therein a relative phase shift between the PWM pulses depends on an amount of power transfer required from secondary bridge circuit 326 to the primary bridge circuit 316, a capacity of the DC power supply, and a DC-link voltage to which the primary capacitor is to be charged.

The time required to charge the primary capacitor 114 depends upon the equivalent impedance offered by the primary bridge circuit 314, the secondary bridge circuit 326, and the frequency transformer 302.

During the charging of the primary capacitor 114, the dual-active-bridge converter circuit 300 periodically determined in step 414 whether any abnormal conditions are present. In the case that no abnormal conditions are detected, the pre-charging procedure continues with step 416 in which the dual-active-bridge converter circuit 300 determined a capacitor voltage of the primary capacitor 114.

In the case that the capacitor voltage is sufficiently large, i.e. above a pre-determined desired voltage *V_{des},* the dual-active-bridge converter circuit 300 withdraws all firing commands to the primary bridge circuit 116 and to the secondary bridge circuit 126 and closes the line contactors of the contactor element 112 which is represented by step 418 of the pre-charging procedure 400. Subsequently, the procedure stops with step 424. However, in the case that in step 416, the dual-active-bridge converter circuit 300 determines that the capacitor voltage V cap of the primary capacitor 114 is not sufficient, the pre-charging procedure returns to step 412 of even to step 409.

In case the dual-active-bridge converter circuit 300 detected an abnormal condition in step 414, the pre-charging procedure 400 is continued with step 420. In step 420, the dual-active-bridge converter circuit 300 withdraws all firing commands from to the primary bridge circuit 316 and the secondary bridge circuit 326. Furthermore, the line contactors 122.1 and 122.2 are opened such that the dual-active-bridge converter circuit 300 can undergo maintenance.

Afterwards the maintenance, the pre-charging procedure 400 is continued with step 422, in which the dual-active-bridge converter circuit 300 determined whether the abnormal condition has been resolved. If the abnormal condition prevails, the pre-charging procedure 400 returns to step 420. If the abnormal condition is resolved, the pre-charging procedure 400 returns to step 412 to continue the charging of the primary capacitor 114.

Some abnormal conditions can occur due to an over current (i.e. in particular a current above the specific quantity or short circuit condition), an over voltage and/or low voltage, a communication failure and/or also a gate driver fault. The presence of the voltage, current sensors and the software based control algorithm can be used to determine the abnormal conditions. Abnormal conditions are not limited to those mentioned above; other can also occur depending on the operation situation.

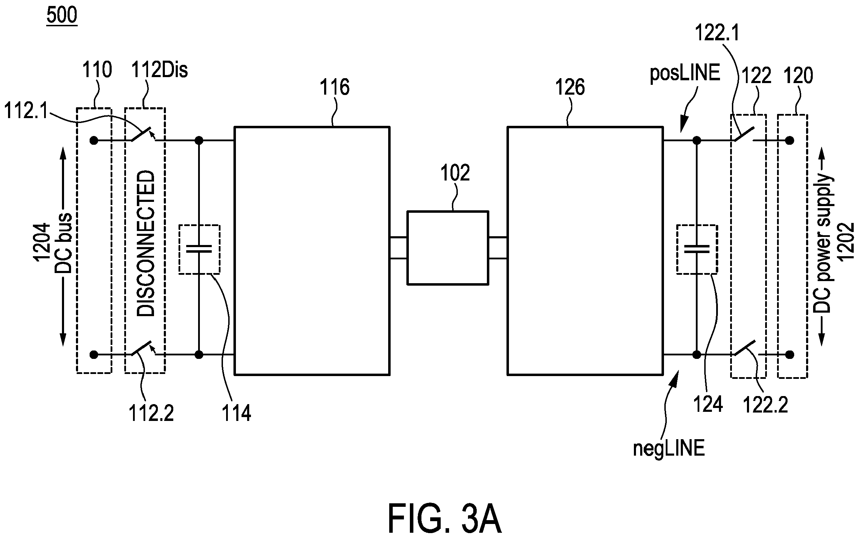

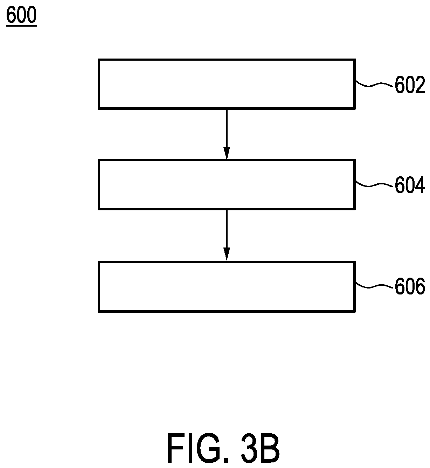

As has been addressed with regard to the pre-charging procedure 400, the dual-active-bridge converter circuit has to undergo maintenance once in a while. Yet, particularly during maintenance, a charged primary capacitor or a charged secondary capacitor poses a risk to maintenance personal as well as equipment. For that reason, other embodiments of the dual-active-bridge converter circuit are configured to additionally or alternatively execute a de-energizing procedure. An embodiment of the dual-active-bridge converter circuit that is configured to execute such a de-energizing procedure will be described in the following with reference to FIG. 3A and FIG. 3B.

FIG. 3A shows an embodiment of a dual-active-bridge converter circuit 500 that is configured to execute a de-energizing procedure.

The dual-active-bridge converter circuit 500 is identical to the dual-active-bridge converter circuit 100 of FIG. 1. FIG. 3A shows, however shows that the dual-active-bridge converter circuit 500 is in a mode configured to execute a de-energizing procedure 600 for de-energizing the primary capacitor 114. The de-energizing procedure 600 will be further described with reference to FIG. 3B.

FIG. 3B shows a flow chart of the de-energizing procedure 600 executed by the dual-active-bridge converter circuit 500 in the mode shown in FIG. 3A.

The de-energizing procedure 600 comprises four steps. In step 602, the dual-active-bridge converter circuit electrically disconnects the primary bridge circuit 116 from the DC bus using the line contactors 112.1 and 112.2 of the contactor element 112. Thus, the primary contactor element 112 with the line contactors 112.1 and 112.2 is shown in a disconnecting operation state of primary contactor element 112Dis.

In step 604, the dual-active-bridge converter circuit 500 ceases any power transfer from secondary bridge circuit 126 to the primary bridge circuit 116 by withdrawing all firing commands to the secondary bridge circuit 126. In step 606, the dual-active-bridge converter circuit 500 dissipates electrical energy stored by the primary capacitor 114 using the primary bridge circuit 116.

The execution of the pre-charging procedure and the de-energizing procedure is independent from each other. As such, some embodiments of the dual-active-bridge converter circuit are configured to execute the de-energizing procedure only, without the pre-charging procedure.

Particularly in the case that the DC power supply is a low-voltage power supply, de-energizing the primary capacitor already removes most of the risk for personal and equipment. However, it can still be advantageous to also dissipate the energy stored in the secondary capacitor 124 during the de-energizing procedure.

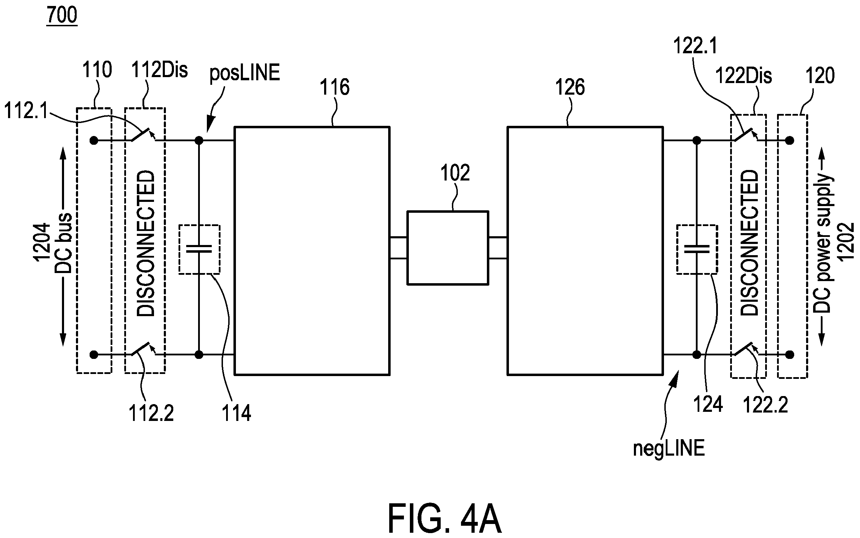

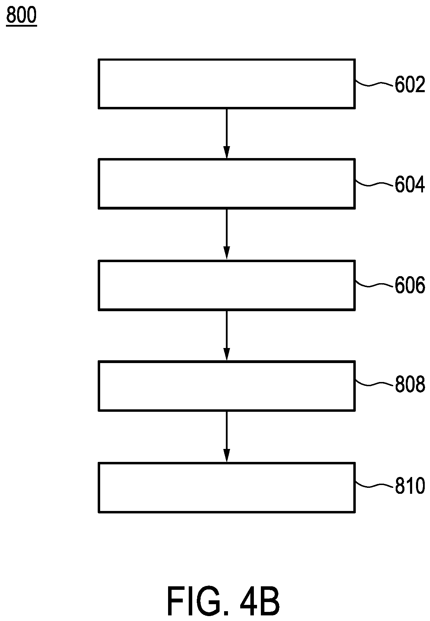

An embodiment of the dual-active-bridge converter circuit that is configured to execute such an extended de-energizing procedure will be described in the following with reference to FIG. 4A and FIG. 4B.

FIG. 4A shows an embodiment 700 of a dual-active-bridge converter circuit that is configured to execute an extended de-energizing procedure 800.

The dual-active-bridge converter circuit 700 is identical to the dual-active-bridge converter circuit 500 of FIG. 3A, except that the dual-active-bridge converter circuit 700 is configured to execute the extended de-energizing procedure 800. The extended de-energizing procedure 800 will be described in the following with reference to FIG. 4B.

FIG. 4B shows a flow chart of the extended de-energizing procedure 800 executed by the dual-active-bridge converter circuit 700 of FIG. 4A.

The first three steps of the extended de-energizing procedure 800 are identical to steps 602, 604, and 606 of the de-energizing procedure 600 of FIG. 3B, which will not be described further here. Thus, the primary contactor element 112 with the line contactors 112.1 and 112.2 is shown in a disconnecting operation state of primary contactor element 112Dis.

In addition to the de-energizing procedure 600, the de-energizing procedure 800 comprises step 808 and step 810. In step 808, the dual-active-bridge converter circuit 700 electrically disconnects the secondary bridge circuit 126 from the DC power supply using the line contactors 122.1 and 122.2 of the secondary contactor element 122. Thus, the secondary contactor element 122 with the line contactors 122.1 and 122.2 is shown in a disconnecting operation state of secondary contactor element 122Dis.

Subsequently, in step 810, the electrical energy stored in the secondary capacitor 124 is dissipated using the secondary bridge circuit 126.

In the following a further embodiment 900 of the dual-active-bridge converter circuit will be described with reference to FIG. 5A and FIG. 5B that is configured to execute a further elaborated variant of the de-energizing procedure.

FIG. 5A shows the embodiment 900 of a dual-active-bridge converter circuit that is configured to execute a further elaborated de-energizing procedure 1000. The primary and secondary bridge circuit 316, 326 as shown therein each establish a full-bridge converter circuit (H-bridge circuit) and here each comprise four switching elements, wherein the switching elements are realized through a parallel --more precisely anti-parallel-- arrangement of a diode and a transistor. The dual-active-bridge converter circuit 900 thus is identical to the dual-active-bridge converter circuit 300 of FIG. 2A, except that the dual-active-bridge converter circuit 900 is configured to execute the further elaborated de-energizing procedure 1000 that will be described in the following with reference to FIG. 5B.

FIG. 5B shows the further elaborated de-energizing procedure 1000 as executed by the dual-active-bridge converter circuit 900 of FIG. 5A.

The de-energizing procedure 1000 starts with step 1002. In step 1004, the dual-active-bridge converter circuit withdraws any firing commands from the primary bridge circuit 316 and the secondary bridge circuit 326. Furthermore, the dual-active-bridge converter circuit 900 opens the line contactors 112.1 and 112.2 as well as 122.1 and 122.2. Thus, the primary contactor element 112 with the line contactors 112.1 and 112.2 is shown in a disconnecting operation state of primary contactor element 112Dis. Thus, the secondary contactor element 122 with the line contactors 122.1 and 122.2 is shown in a disconnecting operation state of secondary contactor element 122Dis.

In step 1006, the dual-active-bridge converter circuit 900 determines whether a voltage V cap of the primary conductor 114 is larger than zero. In the case that the voltage stored by the primary capacitor 114 is zero, the de-energizing procedure 1000 continues with step 1016 which stops the de-energizing procedure 1000.

In the case the voltage of the primary capacitor 114 is larger than zero, the procedure 1000 continues with step 1008. In step 1008, the dual-active-bridge converter circuit 900 issues firing commands to the primary bridge circuit 316 to operate in inverter mode so as to dissipate the energy stored in the primary capacitor 114, wherein an equivalent impedance of the frequency transformer 302 acts as a load. Instead of operating the primary bridge circuit 316 with continuous firing commands as in case of an inverter, the pulses will be regulated by adjusting a duty ratio in terms of short durations to avoid excess heating of transformer windings of the frequency transformer 302.

After a certain period of time, the dissipation of the energy of the primary capacitor 114 is stopped and the dual-active-bridge converter circuit 900 continues with step 1010. In step 1010, the dual-active-bridge converter circuit determines whether any abnormal conditions, like e.g. those from the list mentioned above, are present. If no abnormal condition is detected, the procedure return to step 1006. If there are abnormal conditions detected, the procedure continues with step 1012. In step 1012, the dual-active-bridge converter circuit 900 withdraws any firing commands to undergo maintenance. Alternatively, the dual-active-bridge converter circuit is configured to adjust a duty ratio of the firing commands to reduce strain on the primary bridge circuit.

Subsequently to step 1012, step 1014 is executed in which the dual-active-bridge converter circuit 900 checks whether the abnormal conditions are cleared. If the abnormal conditions are cleared, the dual-active-bridge converter circuit 900 returns to step 1008. In the case that the abnormal conditions prevail, the dual-active-bridge converter circuit 900 returns to step 1012 for further maintenance or duty cycle adjustment.

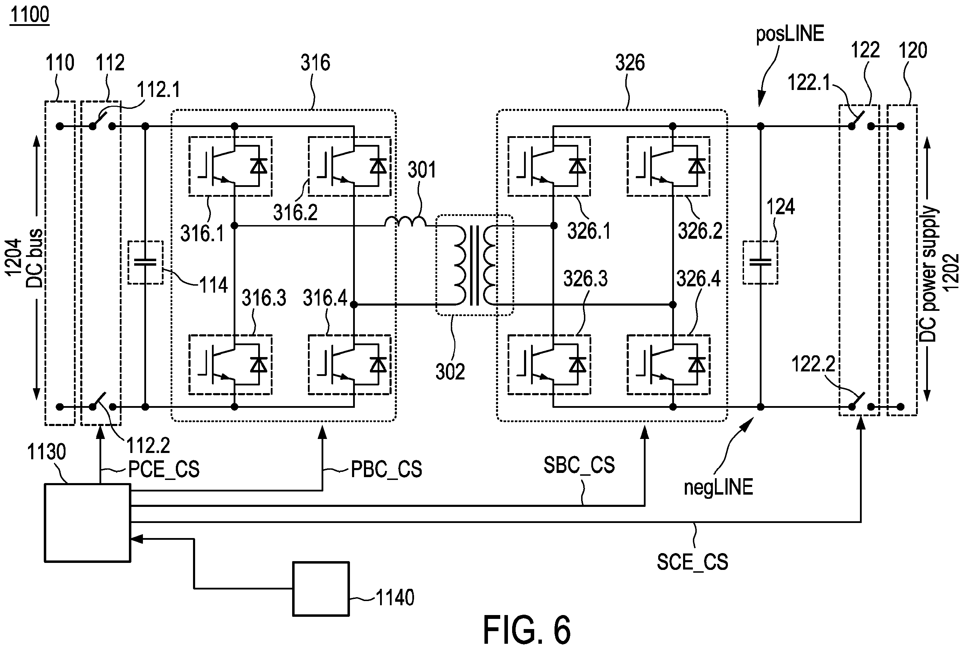

It is advantageous to bundle the capabilities of executing the pre-charging procedure or the de-energizing procedure into a single control circuit that is configured to control the dual-active-bridge converter circuit. An embodiment of the dual-active-bridge converter circuit comprising such a control circuit will be described in the following with reference to FIG. 6.

FIG. 6 shows an embodiment of a dual-active-bridge converter circuit 1100 comprising a control circuit 1130.

The dual-active-bridge converter circuit 1100 is in large parts identical to the dual-active-bridge converter circuit 300 of FIG. 2A.

In addition, the dual-active-bridge converter circuit 1100 comprises the control circuit 1130. The control circuit 1130 is configured to execute the pre-charging procedure 400 and the de-energizing procedure 1000. To this end, the control circuit 1130 is configured to send a control signal PCE CS to the primary contactor element 112 that is indicative of a command to either switch the contactor element 112 into an open state or into a closed state. Likewise, the control circuit 1130 is configured to also send a control signal SCE CS to the secondary contactor element 122 that is indicative of a command to either switch the contactor element 122 into an open state or a closed state.

Furthermore, the control circuit 1130 is configured to send a control signal PBC_ CS to the primary bridge circuit 316 indicative of firing commands to be executed by the primary switching elements 316.1 to 316.4. Likewise, the control circuit 1130 is configured to also send a control command SBC CS to the secondary bridge circuit that is indicative of firing commands to be executed by the secondary switching elements 326.1 to 326.4.

Moreover, the dual-active-bridge converter circuit 1100 comprises a temperature sensor 1140. The temperature sensor is configured to determine an operation temperature of the dual-active-bridge converter circuit 1100. To identify an abnormal condition, the control circuit 1130 is configured to compare the operation temperature measured by the temperature sensor 1140 to an operation temperature limit, wherein an operation temperature that is larger than the operation temperature limit indicates an abnormal condition.

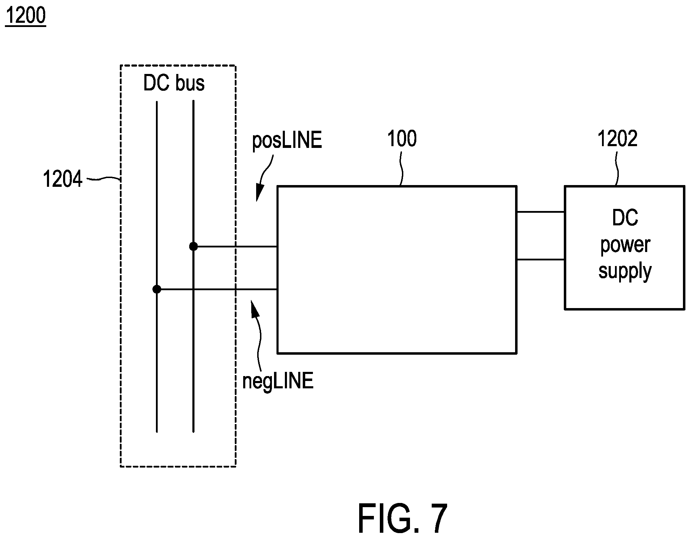

An embodiment of a dual-active-bridge converter arrangement according to the idea of the invention will be described with reference to FIG. 7.

FIG. 7 shows an embodiment 1200 of a dual-active-bridge converter arrangement according to the idea of the invention. The dual-active-bridge converter arrangement comprises the dual-active-bridge converter circuit 100 of FIG. 1, wherein the secondary terminal 120 is electrically connected to a positive and a negative power line posLINE, negLINE of a DC power supply 1202. Furthermore, the primary terminal 110 is electrically connected to a positive and a negative power line of a DC bus 1204.

In particular, in the embodiment 1200 is that of an electric vehicle or hybrid electric vehicle, wherein the DC power supply 1202 is a low-voltage battery and the DC bus 1204 connects the dual-active-bridge converter circuit 100 to an electric engine of the electric vehicle or hybrid electric vehicle.

In summary, the invention describes a dual-active-bridge converter circuit comprising a primary bridge circuit and a secondary bridge circuit that are inductively coupled to each other through a frequency transformer and a primary capacitor that is connected in parallel to the primary bridge circuit. Furthermore, the primary bridge circuit and the primary capacitor are electrically connectable to a DC bus, and the secondary bridge circuit is electrically connectable to a DC power supply.

As referring to the prior art. the pre-charging and discharging circuits are mandatory for the operation of DC/DC converters to avoid the arcing of contactors at starting and disconnecting DC/DC converter from the DC-bus for the maintenance. In general, the pre-changing circuit consists of semiconductor switch dong with sensing and control circuit and a series resistor to limit the charging current. The discharging of capacitor is performed through dissipating the stored energy of the capacitor into the resistor.

An existing approach of the pre-charging circuit of DC-link capacitors in detailed in the annex of FIG. 8 and FIG. 9. In this approach, pre-charging circuit encompasses of controlled current source, which delivers the constant pre-charging current to the DC-link capacitor. The pre-charging circuit consists of a semiconductor switch and a resistor in series and dong with the controlling driver circuit. The discharging of DC-link capacitor can be done with help of bleeder resistor, which is connected in parallel to the DC-link capacitor. In the case of another approach, instead of connecting bleeder resistor across DC-link capacitor. it is connected in series with the semiconductor switch to safely discharge the stored charge. In this approach, the semiconductor switch i.e. TRIAC based controller is developed to perform charging and discharging functions of DC-link capacitor. The controller circuit consists of timing circuit, voltage sensor and microcontroller. The main drawback of the prior art is the use of additional circuit for the purpose of pre-changing and discharging the DC-link capacitors. This leads to the increase in the overal cost and size of the system.

FIG .8 shows an existing approach of the pre-charging circuit of dc-link capacitors. In this approach, pre-charging circuit encompasses of controlled current source, which delivers the constant pre-charging current to the dc-link capacitor.

FIG. 9 shows the embodiment of pre-charge circuit, which consists of a semiconductor switch and a resistor in series and dong with the controlling driver circuit. The discharging of dc-link capacitor can be done with help of bleeder resistor, which is connected in parallel to the dc-link capacitor.

Another approach -as a comparative example of elucidation of the invention-- of pre-charging and discharging circuit is shown in FIG. 10 as a general scheme of a comparative embodiment for comparison to the dual-active-bridge converter circuit in detail as shown for the dual-active-bridge converter of FIG. 2A and FIG. 5A.

Instead of connecting bleeder resistor across DC-link capacitor, it is connected in series with the semiconductor switch to safely discharge the stored charge. In this approach, the semiconductor switch i.e. TRIAC based controller is developed to perform charging and discharging functions of dc-link capacitor. The controller circuit consists of timing circuit, voltage sensor and microcontroller.

Referring to FIG. 10 the dual active bridge converter consists of two voltage sourced full bridge circuits 27 and 30 that are connected to the inductor 28 and the medium frequency transformer 29. The DC-link capacitors 26 and 31 also provided at input and output sides of DAB converter to ensure stiff DC-voltages respectively. In order to transfer power, time varying voltages V_AB and V_CD must be provided by the full bridge circuits 27 and 30 to both the medium frequency transformer 29 and the series inductance 28. This inductance can be the leakage inductance of the transformer, or in case that a bigger value is needed, additional one should be place in series with it.

In the proposed embodiment of the invention, the pre-charging and discharging blocks are excluded in between the contactors and DC-link capacitor at DC-bus side of DAB converter and similarly in between the contactors and capacitor on battery side of the converter. The method of pre-charging of DC-link capacitors is proposed in this invention without additional pre-charging circuit is described with the help of flowchart in detail in the FIG. 2B. By altering the operating modus of the This control algorithm is also included to troubleshoot if any fault condition is occurred while operating the DAB converter The flowchart for the discharging process of the DC-link capacitor for the present embodiment is described in the FIG. 5B.

Further, by utilizing the primary and the secondary bridge circuit to pre-charge the primary capacitor, parameters of the pre-charging procedure, such as the required time, can be adjusted easily by adjusting the operation of primary bridge circuit and the secondary bridge circuit, i.e. by adjusting pulse widths and phase angles of firing commands send to the primary bridge circuit and the secondary bridge circuit.

Thereby voltage stress during switching is lowered in a greater extent as compared to the comparative scheme of FIG. 10. The up to now known pre-charging circuits can also lower voltage stress as such but provide lower voltage stress during main contactor switching to the lines of the bus (PosLine and NegLine as mentioned in the Figures). The pre-charging contactor during switching however may experience the high voltage stress because of a low voltage drop at the pre-charging resistor.

This situation is avoided in the proposed invention as the pre-charging contactor is not used. Further there is no need for a high voltage DC breaker in the concept of the invention. The capacitor at high voltage side can be charged from low voltage side of dual active bridge converter while it is still not connected to high voltage dc bus. Once the capacitor at high voltage side reach a certain value, a DC breaker can be used to connect high voltage side dual active bridge converter with high voltage dc bus. A voltage rating of DC breaker can be lower than voltage at DC bus because closing of two points is carried out while both side (high voltage dc bus and high voltage side of dual active bridge converter) has a minimum voltage different.

As explained with FIG. 1A to FIG. 7 the present invention is about pre-charging and discharging of DC-link capacitors, so the operation of dual active bridge converter is not discussed in detail.

In particular according to the preferred embodiment of the invention transferring electrical power received from the DC power supply 1202 from the secondary bridge circuit 126 to the primary bridge circuit 116 comprises at least the step of:
- issue firing commands to the primary bridge circuit 116 and secondary bridge circuit 126 in constant current and voltage control mode, wherein a phase shift angle for primary bridge circuit 116 and secondary bridge circuit 126 is set dependent on an amount of power transfer from the secondary bridge circuit 126 to the primary bridge circuit 116,
in particular is set dependent on a magnitude of pre-charging the primary capacitor
114 and/or voltage of the DC power supply 1202 and DC bus 1204.

In particular additionally or alternatively according to the preferred embodiment of the invention dissipating electrical energy stored in the primary capacitor 114 using at least the primary bridge circuit 116 comprises at least the step of:
- issuing firing commands to the primary bridge circuit 316 to operate in the inverter mode so as to dissipate the energy stored in the primary capacitor 114 to the frequency transformer 302, wherein an equivalent impedance of the frequency transformer 302 acts as a load,
in particular wherein issuing firing commands is established non-continuously or regulated with shortened duration.

In general thus, in summary in the invention
- the dual-active-bridge converter circuit 100 further is configured to execute a pre-charging procedure for pre-charging the primary capacitor 114,
wherein the pre-charging procedure comprises at least the step of transferring electrical power received from the DC power supply 1202 from the secondary bridge circuit 126 to the primary bridge circuit 116;
and/or
- the dual-active-bridge converter circuit 500 is configured to execute a de-energizing procedure for de-energizing the primary capacitor 114,
wherein the de-energizing procedure comprises at least the step of dissipating electrical energy stored in the primary capacitor 114 using at least the primary bridge circuit 116.

In particular the dual-active-bridge converter circuit is configured to execute a pre-charging procedure for pre-charging the primary capacitor comprising the steps of:
- electrically connect the secondary bridge circuit 126 to the DC power supply 1202;
- transfer electrical power received from the DC power supply 1202 from the secondary bridge circuit 126 to the primary bridge circuit 116;
- electrically charge the primary capacitor 114 using the transferred electrical power; and
- electrically connect the primary bridge circuit 116 with the DC bus 1204.

In particular, the dual-active-bridge converter circuit 500 is configured to execute a de-energizing procedure for de-energizing the primary capacitor 114, wherein the de-energizing procedure comprises the steps of:
- electrically disconnect the primary capacitor 114 and the primary bridge circuit 116 from the DC bus;
- cease any power transfer from the secondary bridge circuit 126 to the primary bridge circuit 116; and
- dissipate electrical energy stored in the primary capacitor 114 using the primary bridge circuit 116.

### LIST OF REFERENCE SIGNS

- 100: active-bridge converter circuit, namely here dual-active-bridge converter circuit
- 102: frequency transformer
- 110: primary terminal
- 112, 112Dis: primary contactor element, disconnected primary contactor element
- 112.1-112.2: line contactors
- 114: primary capacitor
- 116: primary bridge circuit
- 120: secondary terminal
- 122, 122Dis: secondary contactor element, disconnected secondary contactor element
- 122.1-122.2: line contactors
- 124: secondary capacitor
- 126: secondary bridge circuit
- 200: pre-charging procedure
- 202-208: steps of the pre-charging procedure
- 300: further elaborated active-bridge converter circuit, namely here dual-active-bridge converter circuit
- 301: inductor
- 302: frequency transformer
- 316: primary bridge circuit
- 316.1-316.4: switching elements of the primary bridge circuit
- 326: secondary bridge circuit
- 326.1-326.4: switching elements of the secondary bridge circuit
- 330: contactor element
- 330.1-330.2: line contactors
- 340: power supply
- 400: pre-charging procedure
- 402-424: steps of the pre-charging procedure
- 500: dual-active-bridge converter circuit
- 600: de-energizing procedure
- 602-606: steps of the de-energizing procedure
- 700: dual-active-bridge converter circuit
- 800: extended de-energizing procedure
- 808-810: steps of the extended de-energizing procedure
- 900: active-bridge converter, namely here dual-active-bridge converter circuit
- 1000: further elaborated de-energizing procedure
- 1002-1016: steps of the further elaborated de-energizing procedure
- 1100: dual-active-bridge converter circuit
- 1130: control circuit
- 1140: temperature sensor
- 1200: dual-active-bridge converter arrangement
- 1202: DC power supply
- 1204: DC bus
- PBC_CS, PCE_CS, SBC_CS, SCE_CS: control signals
- posLINE, negLINE, DCbus: positive and negative line, DC bus

## Claims

1. Active-bridge converter circuit (100), in particular a dual-active-bridge converter circuit (100), comprising a primary bridge circuit (116) and a secondary bridge circuit (126) that are inductively coupled to each other through a frequency transformer (102), wherein
- a primary capacitor (114) is connected in parallel to the primary bridge circuit (116),
- the primary bridge circuit (116) and the primary capacitor (114) are electrically connectable to a DC bus (1204), and
- the secondary bridge circuit (126) is electrically connectable to a DC power supply (1202);
**characterized in that**
- the active-bridge converter circuit (100) further is configured to execute a pre-charging procedure for pre-charging the primary capacitor (114),
wherein the pre-charging procedure comprises at least the step of transferring electrical power received from the DC power supply (1202) from the secondary bridge circuit (126) to the primary bridge circuit (116);
and/or
- the active-bridge converter circuit (500) is configured to execute a de-energizing procedure for de-energizing the primary capacitor (114),
wherein the de-energizing procedure comprises at least the step of dissipating electrical energy stored in the primary capacitor (114) using at least the primary bridge circuit (116).

2. Active-bridge converter circuit (300) according to claim 1, wherein the pre-charging procedure comprises the steps of:
- electrically connect the secondary bridge circuit (126) to the DC power supply (1202);
- transfer electrical power received from the DC power supply (1202) from the secondary bridge circuit (126) to the primary bridge circuit (116);
- electrically charge the primary capacitor (114) using the transferred electrical power; and
- electrically connect the primary bridge circuit (116) with the DC bus (1204).

3. Active-bridge converter circuit (300) according to claim 1 or 2, wherein transferring electrical power received from the DC power supply (1202) from the secondary bridge circuit (126) to the primary bridge circuit (116) comprises at least the step of:
- issue firing commands to the primary bridge circuit (116) and secondary bridge circuit (126) in constant current and voltage control mode, wherein a phase shift angle for primary bridge circuit (116) and secondary bridge circuit (126) is set dependent on an amount of power transfer from the secondary bridge circuit (126) to the primary bridge circuit (116),
in particular is set dependent on a magnitude of pre-charging the primary capacitor (114) and/or voltage of the DC power supply (1202) and DC bus (1204).

4. Active-bridge converter circuit (300) according to any of the preceding claims, wherein the active-bridge converter circuit (300) is configured to only electrically connect the primary bridge circuit (316) and the primary capacitor (114) with the DC bus, upon the electrical charges stored in the primary capacitor (114) surpassing a minimum charge level.

5. Active-bridge converter circuit (1100) according to any of the preceding claims, wherein
- the active-bridge converter circuit (1100) comprises a condition observation unit (1140) that is configured to determine an operation condition of the active-bridge converter circuit (1100); and wherein
- the active-bridge converter circuit (1100) is configured, in case an abnormal operation condition of the active-bridge converter circuit (1100) is detected by the condition observation unit (1140), to stop the charging of the primary capacitor (114).

6. Active-bridge converter circuit (300) according to any of the preceding claims, wherein
- the primary bridge circuit (316) and the secondary bridge circuit (326) comprise primary switching elements (316.1-316.4) and secondary switching elements (326.1-326.4), respectively; and wherein
the active-bridge converter circuit (300) is configured
- to transfer the electrical power received from the DC power supply from the secondary bridge circuit (326) to the primary bridge circuit (316) by operating the secondary switching elements (326.1-326.4); and
- to electrically charge the primary capacitor (114) by operating the primary switching elements (316.1-316.4).

7. Active-bridge converter circuit (100) according to any of the preceding claims, wherein
- the primary bridge circuit (116) is electrically connectable to the DC bus through a primary contactor element (112), and
- the secondary bridge circuit (126) is electrically connectable to the DC power supply through a secondary contactor element (122); and wherein
the active-bridge converter circuit (100) is configured
- to electrically connect the primary bridge circuit (116) to the DC bus by switching the primary contactor element (112) into a closed state, and
- to electrically connect the secondary bridge circuit (126) to the DC power supply by switching the secondary contactor element (122) into a closed state.

8. Active-bridge converter circuit (300) according to any of the preceding claims, wherein
- the active-bridge converter circuit (300) comprises an auxiliary DC power supply (340);
- the active-bridge converter circuit (300) is configured to determine a DC power supply charge level indicative of a level of charge of the DC power supply; and
- in case that the DC power supply charge level is below a minimum charge level, the active-bridge converter circuit (300) is configured to use electrical energy stored in the auxiliary DC power supply (340) to charge the primary capacitor (114).

9. Active-bridge converter circuit (500) according to any of the preceding claims, wherein the active-bridge converter circuit (500) is configured to execute a de-energizing procedure for de-energizing the primary capacitor (114), wherein the de-energizing procedure comprises the steps of:
- electrically disconnect the primary capacitor (114) and the primary bridge circuit (116) from the DC bus;
- cease any power transfer from the secondary bridge circuit (126) to the primary bridge circuit (116); and
- dissipate electrical energy stored in the primary capacitor (114) using the primary bridge circuit (116).

10. Active-bridge converter circuit (500) according to any of the preceding claims, wherein dissipating electrical energy stored in the primary capacitor (114) using at least the primary bridge circuit (116) comprises at least the step of:
- issuing firing commands to the primary bridge circuit (316) to operate in the inverter mode so as to dissipate the energy stored in the primary capacitor (114) to the frequency transformer (302), wherein an equivalent impedance of the frequency transformer (302) acts as a load,
in particular wherein issuing firing commands is established non-continuously or regulated with shortened duration.

11. Active-bridge converter circuit (700) according to any of the preceding claims, wherein
- the active-bridge converter circuit (700) comprises a secondary capacitor (124) that is connected in parallel to the secondary bridge circuit (126); and wherein
the de-energizing procedure comprises the steps of:
- electrically disconnect the secondary bridge circuit (126) from the DC power supply;
- optionally dissipate electrical energy stored in the secondary capacitor (124) using the secondary bridge circuit (126).

12. Active-bridge converter circuit (900) according to any of the preceding claims, wherein the
- the primary bridge circuit (316) and the secondary bridge circuit (326) comprises primary switching elements (316.1-316.4) and secondary switching elements (326.1-326.4), respectively; and wherein
the active-bridge converter circuit (900) is configured
- to dissipate the electrical energy stored in the primary capacitor (114) by operating the primary switching elements (316.1-316.4), and
- optionally, to dissipate the electrical energy stored in the secondary capacitor (124) by operating the secondary switching elements (326.1-326.4).

13. Active-bridge converter circuit (500) according to any of the preceding claims, wherein
- the primary bridge circuit (116) is electrically connectable to the DC bus through a primary contactor element (112), and
- the active-bride converter circuit (500) is configured to electrically disconnect the primary capacitor (114) and the primary bridge circuit (116) from the DC bus by setting the primary contactor element (112) into an open state.

14. Active-bridge converter circuit (1100) according to at least one of the preceding claims, wherein the active-bridge converter circuit (1100) comprises a controller circuit (1130) that is connected to the primary bridge circuit (316) and the secondary bridge circuit (326) and that is configured to execute the pre-charging procedure and/or the de-energizing procedure.

15. Active-bridge converter circuit (100) according to at least one of the preceding claims, wherein the active-bridge converter circuit (100) does not comprise any circuits connected in series or in parallel to the primary capacitor whose main purpose is pre-charging or de-energizing the primary capacitor (114).

16. Active-bridge converter arrangement (1200) comprising
- the active-bridge converter circuit (100) according to at least one of the claims 1 to 15,
- a DC power supply (1202) electrically connected to the secondary bridge circuit (126) of the active-bridge converter circuit (100), and
- a DC bus (1204) electrically connected to the primary bridge circuit (116) of the active-bridge converter circuit (100).

17. Method (200) for operating an active-bridge converter circuit (100), in particular a dual-active-bridge converter circuit (100), comprising a primary bridge circuit (116) and a secondary bridge circuit (126) inductively coupled through a frequency transformer (102), wherein
- a primary capacitor (114) is connected in parallel to the primary bridge circuit (116),
- the primary bridge circuit (116) and the primary capacitor (114) are electrically connectable to a DC bus, and
- the secondary bridge circuit (126) is electrically connectable to a DC power supply;
**characterized in that**
the method includes a pre-charging procedure for pre-charging the primary capacitor (114), wherein the pre-charging procedure comprises at least the step of transferring electrical power received from the DC power supply (1202) from the secondary bridge circuit (126) to the primary bridge circuit (116);
and/or
- the method includes a de-energizing procedure for de-energizing the primary capacitor (114), wherein the de-energizing procedure comprises at least the step of dissipating electrical energy stored in the primary capacitor (114) using at least the primary bridge circuit (116).

18. Method according to claim 17, wherein the pre-charging procedure comprises the steps of:
- electrically connect the secondary bridge circuit to the DC power supply (202);
- transfer electrical power received from the DC power supply from the secondary bridge circuit to the primary bridge circuit (204);
- electrically charge the primary capacitor using the transferred electrical power (206); and
- electrically connect the primary bridge circuit and the primary capacitor to the DC bus (208).

19. Method according to claim 17 or 18, wherein the active-bridge converter circuit (500) is configured to execute the de-energizing procedure for de-energizing the primary capacitor (114), wherein the de-energizing procedure comprises the steps of:
- electrically disconnect the primary capacitor (114) and the primary bridge circuit (116) from the DC bus;
- cease any power transfer from the secondary bridge circuit (126) to the primary bridge circuit (116); and
- dissipate electrical energy stored in the primary capacitor (114) using the primary bridge circuit (116).
